# EUROPEAN PATENT SPECIFICATION

(11) **EP 1 558 854 B1**
(45) Date of publication and mention of the grant of the patent: **18.09.2013**
(21) Application number: 03777618.4
(22) Date of filing: 15.10.2003
(51) Int. Cl.: F16D 1/08, B41F 17/22

(54) **PLATE CYLINDER LOCKING MECHANISM**
PLATTENZYLINDERVERRIEGELUNGSSYSTEM
MECANISME DE BLOCAGE DE CYLINDRE PORTE-PLAQUE

(30) Priority: 22.10.2002 US 420673 P
(43) Date of publication of application: 03.08.2005
(73) Proprietor: Stolle Machinery Company LLC, Centennial, CO 80112 (US)
(72) Inventor: JABLONSKI, Rex, Randolph, NJ 07869 (US)
(74) Representative: Parry, Simon James
(86) International application number: PCT/US2003/032608
(87) International publication number: WO 2004/038246

(56) References cited:
- DE-A1- 3 326 934
- DE-A1- 3 419 307
- DE-U1- 9 100 115
- US-A- 4 093 052
- US-A- 4 624 184

## Description

### BACKGROUND OF THE INVENTION

The invention relates in an improved hydraulic clamp particularly for releasably connecting a cylindrical printing head to a printing shaft in a beverage container decorating machine.

### BACKGROUND ART

A known beverage container decorator machine is disclosed, for example, in U.S. Patent 5,819,648.

As best seen in Figs. 3 and 4 of the '648 patent, a decorator machine includes a plurality of decorator cylinder assemblies 30 each having a printing head 32. The printing head 32 is removably mounted on a shaft head 36 of a printing shaft 34 for being rotated to carry out a decorating operation on, for example, a soft-drink can. The decorator printing plates are typically made from plastic, with a steel backing for being magnetically adhered to the printing head.

A conventional hydraulic clamp stable for retaining the printing head on the printing shaft of the decorator is disclosed in publication WO98/46896. The disclosures of the foregoing publications are incorporated by reference.

Advantages of the use of this type of hydraulic clamp in the locking mechamism include easy removal and assembly of the plate cylinder for labeling changes. The clamp provides zero clearance after locking the hydraulic hub, which results in improved printing quality. Earlier devices required clearance in order to be assembled onto the shaft.

For pressurizing the hydraulic chamber to clamp the device in WO '896 onto a shaft, the device requires either a plurality of axial pressure screws mounted in a complicated collar arrangement, or a single pressure screw oriented circumferantially of the device. In the first case, the removal operation is slow and inconvenient. In the second case, the pressure screw will not be easily and safely accessible in the environment of the typical container decorator machine.
US-A-4093052 discloses a fluid actuated coupling assembly for releasably coupling together of at least two elements and preferably transmitting torque between them. An inner metal sleeve and an outer metal sleeve are secured together to define a very thin gap between them. Means are provided to pressurize that gap to cause radial expansion of the gap and the sleeves.
US 4 624 184 A discloses a hydraulic clamp in accordance withe the preamble of claim 1.

### SUMMARY OF THE INVENTION

Responding to these drawbacks of the prior art, the present invention, see claim 1, allows to easily release the hydraulic clamp from the shaft by a single operation of the pressure screw, which can be carried out from a location safely spaced away from the end of the shaft in the axial direction. Thus, the invention provides a clamp with quicker release and greater safety than with the known clamps.

The advantages of the invention include the use of a single screw, which provides quicker release than the axial clamp of WO '896, which has multiple, smaller screws; the flange; and the stop plate.

The activating screw can be mathematically engineered to perform at least three functions:
A. To move a specific volume of hydraulic grease within the chamber of the hub.
B. To provide sufficient clamping force, by means of the grease, to take up the inner tolerances of the hub and provide effective clamping.
C. To provide reusability; as many mountings (times the hub is released and re-engaged) as possible, until the hub has to be recharged with grease.

The present invention will become apparent from the following description of an embodiment of the invention which refers to the accompanying drawings.

### BRIEF DESCRIPTION OF THE DRAWINGS

Figure 1 is a side view of the disclosed embodiment of the invention, shown partly in cross-section, taken along line B-B of Figure 2.

Figure 2 is an end view of the disclosed embodiment.

### DETAILED DESCRIPTION

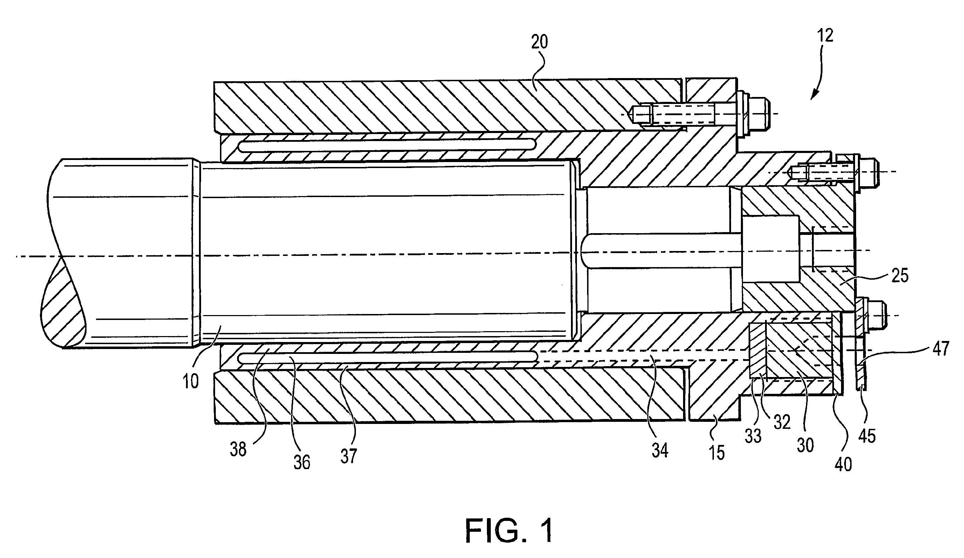

Referring now to Fig. 1, the conventional printing shaft is shown at 10. Mounted on the shaft is a hydraulic clamp 12. The hydraulic clamp 12 comprises a hydraulic hub 15. Printing cylinder 20 is mounted on the hydraulic hub 15 in known fashion. An outer hub 25 is provided on the hydraulic hub 15. The hydraulic hub 15 provides for fine positioning of the printing cylinder 20 for proper printing, again in known fashion.

The hydraulic hub 15 has a circumferential annular recess 36 defined by at least one expandable outer wall 37 and an expandable inner wall 38. When the recess 36 is pressurized, the inner wall 38 clamps onto the shaft 10 and the outer wall 37 clamps against the inside diameter of the printing cylinder at the same time. The hydraulic hub 15 further has a single, large-diameter pressure screw 30 which moves a piston 32 for compressing hydraulic fluid in a hydraulic chamber or recess 33. The hydraulic chamber or recess 33 communicates via a passage 34 with the circumferential chamber or recess 36.

In contrast to the device in WO '896, which requires either a plurality of axial screws mounted in a complicated collar arrangement, or a single screw mounted circumferentially, the present invention requires only a single, axially arranged screw 30 for pressurizing the hydraulic chamber or recess 36. Therefore, the hydraulic clamp 12 can be more easily released from the shaft 10 by a single unscrewing operation, which can be carried out with the operator at a location safely spaced away from the end of the shaft in the axial direction.

In addition, the pressure screw 30 has an enlarged flange 40 on its outside end. The combination of the screw 30 and the flange 40 limits the travel of the screw and piston 32 into the chamber 33 and thus prevents potential overpressure or binding or jamming in the chamber 33.

Further, mounted on the outer hub 25 is a stop plate 45. The stop plate 45 has a hole 47 for permitting insertion of a tool for actuating the pressure screw 30. The stop plate 45 also prevents the pressure screw 30 from being unscrewed too far from the chamber 32 and potentially lost.

In combination, the flange 40 and the stop plate 45 limit the travel of the screw 30 both into and out of the chamber 33. With these limits being automatically provided, the operator is able to move the screw 30 either into or out of the chamber 33 with a minimum of thought and judgment being required, and therefore rapidly and conveniently.

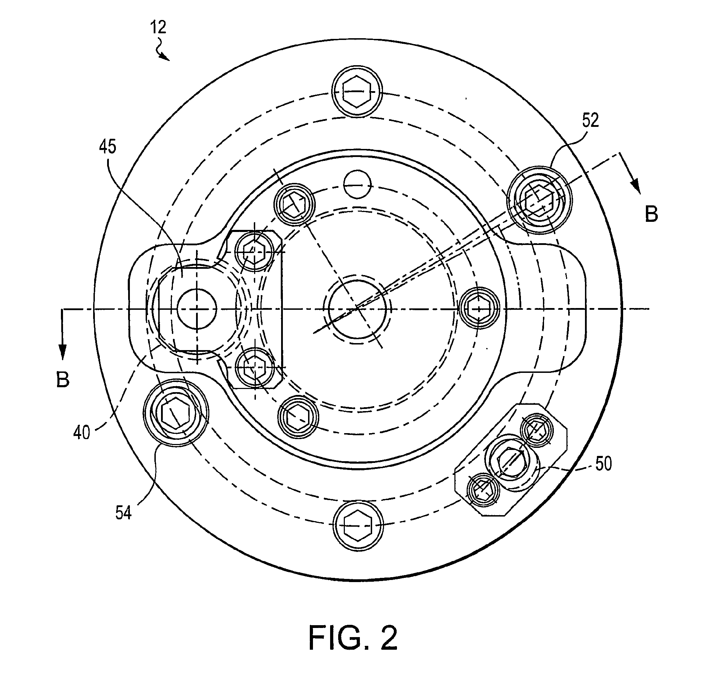

Referring now to Fig. 2, the front face of the hydraulic clamp 12 is shown. Adjustment members for fine image registration are mounted on the front face. A screw 52 allows for lateral inward adjustment. A screw 54 provides lateral outward adjustment. An eccentric stud 50 provides for radial registration.

Although the present invention has been described in relation to a particular embodiment thereof, many other variations and modifications and other uses will become apparent to those skilled in the art.

## Claims

1. A hydraulic clamp (12) for being mounted on a shaft (10), said clamp (12) comprising:
a hydraulic hub (15);
an aperture in said hydraulic hub (15) for receiving said shaft (10), said aperture extending in an axial direction of said hydraulic hub (15) from a first end to a second end thereof; and
a recess (36) formed in said hydraulic hub (15) and substantially surrounding said aperture, for receiving a pressure medium;
said hydraulic hub (15) having at said first end thereof a single pressure screw (30) and a corresponding single piston (32) in a recess or chamber (33), communicating with said recess (36) for pressurizing said pressure medium and thereby deforming said recess (36) sufficiently to secure said clamp to said shaft (10),
said single piston (32) arranged for axial movement toward said second end by means of said screw (20) for pressurizing said pressure medium,
**characterized in that**:
the clamp further comprises a stop plate (45) mounted at the first end of said hydraulic hub (15) for establishing a predetermined limit for axial movement of said single pressure screw (30) away from said second end.

2. The hydraulic clamp (12) of claim 1, wherein said screw (30) further comprises a flange (40) with an exterior surface, which is disposed on said screw (30) for engaging said stop plate (45) thereby establishing said predetermined limit for axial movement of said screw (30).

3. The hydraulic clamp (12) of claim 1, wherein said stop plate (45) has an hole (47) arranged axially of said screw (30), said hole (47) permitting a tool to access said screw (30) by being inserted generally in said axial direction.

4. In combination, the hydraulic clamp (12) of claim 1, and a shaft (10) received in said aperture in said hydraulic hub (15).

5. In combination, a cylindrical printing head (20), and a hydraulic hub (15) according to any of claims 1-3 or a combination according to claim 4, the hub (15) being fixed to the printing head (20) for mounting said printing head (20) on the shaft (10).

## Patentansprüche

1. Hydraulikklemme (12) zum Anbringen an einer Welle (10), wobei die Klemme (12) Folgendes umfasst:
eine Hydrauliknabe (15);
eine Öffnung in der Hydrauliknabe (15) zur Aufnahme der Welle (10), wobei sich die Öffnung in Axialrichtung der Hydrauliknabe (15) von deren erstem Ende zu deren zweitem Ende erstreckt; und
eine in der Hydrauliknabe (15) ausgebildete Aussparung (36), die im Wesentlichen die Öffnung umgibt, zur Aufnahme eines Druckmediums;
wobei die Hydrauliknabe (15) an ihrem ersten Ende eine einzelne Druckschraube (30) und einen entsprechenden einzelnen Kolben (32) in einer Aussparung oder Kammer (33) aufweist, der mit der Aussparung (36) kommuniziert, um das Druckmedium mit Druck zu beaufschlagen und dadurch die Aussparung (36) hinreichend zu verformen, um die Klemme an der Welle (10) festzulegen,
wobei der einzelne Kolben (32) zur Axialbewegung in Richtung des zweiten Endes mithilfe der Schraube (30) angeordnet ist, um das Druckmedium mit Druck zu beaufschlagen,
**dadurch gekennzeichnet, dass**:
die Klemme ferner eine Anschlagplatte (45) umfasst, die am ersten Ende der Hydrauliknabe (15) angebracht ist, um eine vorbestimmte Begrenzung für die Axialbewegung der einzelnen Druckschraube (30) weg vom zweiten Ende einzuhalten.

2. Hydraulikklemme (12) nach Anspruch 1, worin die Schraube (30) ferner einen Flansch (40) mit einer Außenfläche umfasst, der auf der Schraube (30) ausgebildet ist, um mit der Anschlagplatte (45) in Eingriff zu gelangen, wodurch die vorbestimmte Begrenzung für die Axialbewegung der Schraube (30) eingehalten wird.

3. Hydraulikklemme (12) nach Anspruch 1, worin die Anschlagplatte (45) ein Loch (47) aufweist, das axial zu der Schraube (30) angeordnet ist, wobei das Loch (47) es einem Werkzeug ermöglicht, auf die Schraube (30) zuzugreifen, indem es im Wesentlichen in der Axialrichtung eingebracht wird.

4. Hydraulikklemme (12) nach Anspruch 1 und in der Öffnung in der Hydrauliknabe (15) aufgenommene Welle (10) in Kombination.

5. Zylindrischer Druckkopf (20) und Hydrauliknabe (15) gemäß einem der Ansprüche 1 bis 3 in Kombination oder gemäß einer Kombination nach Anspruch 4, wobei die Nabe (15) an dem Druckkopf (20) befestigt ist, um den Druckkopf (20) auf der Welle (10) zu befestigen.

## Revendications

1. Pince hydraulique (12) destinée à être montée sur un arbre (10), ladite pince (12) comprenait
un moyeu hydraulique (15) ;
une ouverture dans ledit moyeu hydraulique (15) pour recevoir ledit arbre (10), ladite ouverture s'étendant dans une direction axiale dudit moyeu hydraulique (15) d'une première extrémité à une seconde extrémité de celui-ci ; et
un évidement (36) formé dans ledit moyeu hydraulique (15) et entourant sensiblement ladite ouverture, pour recevoir un milieu de pression ;
ledit moyeu hydraulique (15) ayant à ladite première extrémité de celui-ci une seule vis de pression (30) et un seul piston correspondant (32) dans un évidement ou chambre (33) communiquant avec ledit évidement (36) pour mettre en pression ledit milieu de pression et en déformant ainsi ledit évidement (36) suffisamment pour fixer ladite pince audit arbre (10),
ledit piston unique (32) agencé pour un mouvement axial vers ladite seconde extrémité au moyen de ladite vis (20) pour mettre en pression ledit milieu de pression, **caractérisée en ce que** la pince comprend en outre une plaque d'arrêt (45) montée sur la première extrémité dudit moyeu hydraulique (15) pour établir une limite prédéterminée pour le mouvement axial de ladite vis de pression unique (30) au loin de ladite seconde extrémité.

2. Pince hydraulique (12) selon la revendication 1, où ladite vis (30) comprend en outre une bride (40) avec une surface extérieure qui est disposée sur ladite vis (30) pour venir en prise avec ladite plaque d'arrêt (45) en établissant ainsi ladite limite prédéterminée pour le mouvement axial de ladite vis (30).

3. Pince hydraulique (12) selon la revendication 1, où ladite plaque d'arrêt (45) présente un trou (47) agencé axialement de ladite vis (30), ledit trou (47) permettant à un outil d'accéder à ladite vis (30) en étant insérée généralement dans ladite direction axiale.

4. En combinaison, la pince hydraulique (12) de la revendication 1, et un arbre (10) reçu dans ladite ouverture dans ledit moyeu hydraulique (15).

5. En combinaison, une tête d'impression cylindrique (20) et un moyeu hydraulique (15) selon l'une quelconque des revendications 1-3 ou une combinaison selon la revendication 4, le moyeu (15) étant fixé à la tête d'impression (20) pour le montage de ladite tête d'impression (20) sur l'arbre (10).
